# EUROPÄISCHE PATENTANMELDUNG

(11) **EP 0 823 446 A2**
(43) Veröffentlichungstag der Anmeldung: **11.02.1998**
(21) Anmeldenummer: 97111020.0
(22) Anmeldetag: 02.07.1997
(51) Int. Cl.: C08G 18/10, C08G 18/32, C09J 175/04

(54) **Neue feuchtigkeitsvernetzende PUR-Schmelzklebstoffe**

(30) Priorität: 08.08.1996 DE 19631993
(71) Anmelder: HÜLS AKTIENGESELLSCHAFT, 45764 Marl (DE)
(72) Erfinder: Wolf, Elmar, Dr., 45661 Recklinghausen (DE)

(57) **Zusammenfassung**

Es werden feuchtigkeitsvernetzende PUR-Schmelzklebstoffe beschrieben. Diese Klebstoffe auf Basis von NCO-Präpolymeren und Polyamin zeigen eine sehr hohe Anfangsfestigkeit.

## Beschreibung

Die vorliegende Erfindung betrifft feuchtigkeitsvernetzende PUR-Schmelzklebstoffe, die dadurch gekennzeichnet sind, daß sie aus einem Gemisch eines NCO-Präpolymeren mit einer NCO-Funktionalität ≥ 2 und einem sterisch gehinderten Polyamin mit einer NH-Funktionalität ≥ 2 bestehen.

Für den Einsatz von Schmelzklebstoffen sprechen in erster Linie ihre günstigen Verarbeitungseigenschaften. Durch das Fehlen von Lösungsmitteln und die rasche Abbindung ohne Topfzeitprobleme läßt sich die Fertigung von Serienteilen außerordentlich rationell einrichten. Grenzen für die Anwendbarkeit ergeben sich häufig durch die mäßigen Beständigkeitseigenschaften der Schmelzklebstoffe. Es handelt sich hierbei naturgemäß um thermoplastische Systeme. Der Aufschmelzprozeß ist reversibel. Mit steigender Temperatur wird die Klebfuge plastischer, bis schließlich wieder Schmelzflüssigkeit erreicht wird. Die chemische Beständigkeit der Schmelzklebstoffe, die Beständigkeit gegen Lösungsmittel, Weichmacher, Öle und Chemikalien ist wie bei allen unvernetzten Harzen und Kunststoffen zu sehen Sie kann gegen ein bestimmtes Medium recht gut sein, insgesamt ist aber immer mit einer hoheren Quellbarkeit oder gar Löslichkeit zu rechnen als bei vernetzten Klebstoffen

Diese grundsätzlichen Schwächen der (thermoplastischen) Schmelzklebstoffe werden zu einem großen Teil von den anfangs der 80er Jahre auf dem Markt eingeführten reaktiven PUR-Schmelzklebstoffen auf der Basis von feuchtigkeitshartenden Polyurethanpräpolymeren übenwunden. Diese Produkte sind zunachst aufschmelzbar wie die herkömmlichen Schmelzklebstoffe, binden nach dem typischen heiß/kalt-Mechanismus ah und vernetzen dann irreversibel in der Klebfuge in einem Zeitraum von einigen Tagen durch chemische Reaktion von noch vorhandenen NCO-Gruppen mit der Feuchtigkeit. Dabei geht der ursprünglich thermoplastische Film in einen duroplastischen Zustand über, d h die ehemals thermoplastische Schmelzklebefuge ist jetzt vernetzt und nicht mehr aufschmelzbar. Vom Zeitpunkt des Auftrags bis zum Vernetzen vergeht eine bestimmte Zeit, die je nach Schmelzklebstoff von mehreren Stunden bis zu einigen Tagen betragen kann. Es ist deshalb auch verständlich, daß bei den feuchtigkeitsvernetzenden PUR-Schmelzklebstoffen die Anfangsfestigkeit, d. h. die Festigkeit der verklebten Materialien unmittelbar nach der Verklebung, unbefriedigend ist.

Für viele Anwendungen ist ein rasches Anbinden der applizierten reaktiven Schmelzklebstoffe notwendig, um bei kurzen Topfzeiten eine sofortige Weiterverarbeitung zu ermöglichen. Es hat deshalb nicht an Versuchen gefehlt, feuchtigkeitsvernetzende PUR-Schmelzklebstoffe mit einer verbesserten Anfangstestigkeit und kürzeren Abbindezeit herzustellen.

So verbessert bei der Verklebung von feuchtigkeitsvernetzenden PUR-Schmelzklebstoffen die Verwendung von Polyestern mit hohem Anteil an aromatischer Dicarbonsäure die Abbindegeschwindigkeit (EP-A 0 248 858), führt aber zu Produkten mit hoher Schmelzviskosität (Verarbeitung erschwert) und im ausgehärteten Zustand zu geringer Flexibilität für viele Anwendungen. Letzteres gilt auch bei der Verwendung schnell kristallisierender Polyester (DE-A 38 27 224). Die starke Kristallisationstendenz fuhrt zu einer spürbaren Volumenänderung bei der Aushärtung, die bei Klebungen ein Abheben der Klebstoffschicht von der Unterlage bewirkt.

Aufgabe der vorliegenden Erfindung war es somit, feuchtigkeitsvernetzende PUR-Schmelzklebstoffe zu entwickeln, mit denen Verklebungen ermöglicht werden, die bereits unmittelbar nach der Verklebung ihre Endfestigkeiten aufweisen Die Aufgabe wurde gemäß der Ansprüche gelöst. Nachfolgend werden die erfindungsgemäßen Klebstoffe beschrieben Gegenstand der Erfindung ist mit einer durch einem mindestens zwei sterisch gehinderte Aminogruppen enthaltenden Polyamin härtbare, NCO-reaktive Polyurethan-Schmelzklebstoff-Zusammensetzung, dadurch gekennzeichnet, daß das Reaktionsprodukt erhältlich ist durch Umsetzung
A) eines NCO-Präpolymeren mit aliphatischen, cycloaliphatischen, (cyclo)aliphatischen oder aromatischen NCO-Gruppen und einen NCO-Gehalt von 1 - 23 % mit
B) einem Polyamin, das
   1. mindestens zwei sterisch gehinderte Aminogruppen folgender Zusammensetzung enthält: 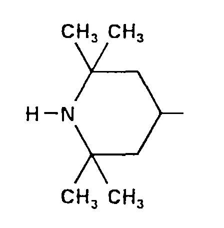 oder
   2. folgende Zusammensetzung aufweist: 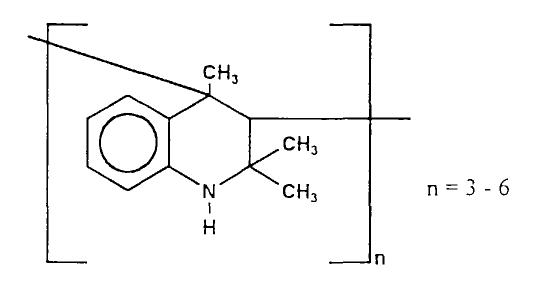 wobei pro NCO-Gruppe 1 - 0,6, vorzugsweise eine sterisch gehinderte Aminogruppe zur Reaktion kommen.

Unter NCO-Präpolymeren im Sinne der vorliegenden Erfindung werden solche verstanden, wie sie aus Diisocyanaten durch Umsetzung zur Molekülvergrößerung mit den in der Isocyanat-Chemie gebräuchlichen sogenannten Kettenverlängerungsmitteln, wie z. B Wasser oder Polyolen, erhalten werden, wobei das bi- oder trifunktionelle Kettenverlängerungsmittel, also solche mit gegenüber Isocyanatgruppen reaktionsfahigen Gruppen, wie OH-Gruppen enthaltenden Verbindungen, in solchen Mengen verwendet wird, daß das resultierende neue Isocyanat im Durchschnitt mindestens zwei NCO-Gruppen trägt. Im Sinne der vorliegenden Erfindung werden auch die trimeren Formen der Diisocyanate, die Isocyanurate, als NCO-Prapolymere verstanden.

Bei den zur Molekülvergrößerung eingesetzten Diisocyanaten handelt es sich um aliphatische, cycloaliphatische, (cyclo)aliphatische, araliphatische oder aromatische Diisocyanate, wie sie beispielsweise in Houben Weyl, Methoden der organischen Chemie, Bd. 14/2, S. 61 - 70 und in dem Artikel von W. Siefken in Justus Liebigs Annalen der Chemie 562, S. 75 - 136 beschrieben werden, wie 1.6-Hexamethylendiisocyanat (HDI), 2-Methylpentamethylendiisocyanat-1.5, 2.2.4(2.4.4)-Trimethyl-1.6-hexmethylendiisocyanat (TMDI), 1.12-Dodecandiisocyanat, Cyclohexan-1.3- und - 1.4-diisocyanat, 3-Isocyanatomethyl-3.5.5-trimethylcyclohexylisocyanat, welches auch als Isophorondiisocyanat bezeichnet und mit IPDI abgekürzt wird, 2.5- bzw. 2.6-Bis(isocyanatomethyl)-bicyclo-[2.2.1]-heptan, Perhydro-2.4'- und/oder -4 4'-diphenylmethandiisocyanat, 2.4- und 2.6-Hexahydrotoluylendiisocyanat, 1.4-Phenylendiisocyanat, 2.4- bzw. 2. 6-Toluylendiisocyanat, 4.4'-Diisocyanatodiphenylmethan (MDI).

Besonders bevorzugt werden in der Regel die technisch leicht zugänglichen Diisocyanate Hexamethylendiisocyanat, Isophorondiisocyanat, Toluylendiisocyanat und 4.4'-Diisocyanatodiphenylmethan.

Für die Molekülvergrößerung von Diisocyanaten, gegebenenfalls auch den daraus hergestellten Isocyanuraten, geeignete Polyole sind beispielsweise Ethylenalykol, 1.2- und 1.3-Propandiol, 2.2-Dimethylpropandiol-1.3, Butandiol-1.4, Hexandiol-1.6, 2.2.4(2.4.4)-Trimethylhexamethylendiol-1.6, Dodecandiol, Octadecandiol-1.18, Diethylenglykol, Triethylenglykol, trans- und cis- 1.4-Cyclohexandimethanol, 1.4-Cyclohexandiol, Glycerin, Hexantriol-1.2.6, Trimethylolpropan. Es können auch Mischungen der vorgenannten Verbindungen verwendet werden. Bevorzugt werden jedoch Polyesterpolyole mit einem mittleren Molgewicht von 300 - 4 000, vorzugsweise 1 000 - 3 000, eingesetzt. Die Polyesterpolyole mit einer OH-Funktionalitat von 2 - 3 werden in bekannter Weise durch Kondensation der aufgeführten Polyole und aliphatischen und/oder aromatischen Dicarbonsauren, wie z. B. Adipinsaure, Sebacinsaure, Dodecandisäure, 2.2.4(2.4.4)-Trimethyladipinsäure, Terephthalsäure, Isophthalsäure und Phthalsäure bzw. Phthalsaureanhydrid, hergestellt.

Bei der Kettenverlängerung mit H₂O sollen im Sinne der vorliegenden Erfindung ausschließlich Biuretgruppen enthaltende Polyisocyanate gebildet werden Ihre Herstellung wird in den DE-OSS 23 08 015, 26 19 548, 29 18 739 beschrieben. Wasser wird dabei portionsweise zu dem im großen Überschuß vorliegenden Diisocyanat bei ca. 80 °C zugegeben und nach beendeter H₂O-Zugabe so lange bei 80 °C weitererhitzt, bis pro Mol eingesetztes H₂O zwei NCO-Äquivalente reagiert haben. Danach wird bei 140 °C noch so lange erhitzt, bis ein weiteres NCO-Äquivalent umgesetzt ist. Anschließend wird das nicht umgesetzte Diisocyanat durch Dünnschichtdestillation bei 120 - 160 °C/0, 1 mbar vom Reaktionsprodukt abgetrennt. Das Reaktionsprodukt besitzt einen NCO-Gehalt von 16 - 23 % und einen Monomergehalt von ≤ 0,5 %.

Die Herstellung der durch Trimerisierung von Diisocyanaten erhaltenen Isocyanurate wird in den DE-OSS 25 51 634, 26 44 684, 29 16 201 beschrieben; bevorzugt wird zur Trimerisierung der in der DE-OS 29 16 201 beschriebene Katalysator (quaternäre Ammoniumsalze) eingesetzt. 'Am zweckmäßigsten hat sich bei der chargenweisen Herstellung von Isocyanuratgruppen aufweisenden Polyisocyanaten folgende Verfahrensweise erwiesen. Zugabe des Katalysators zu dem auf 80 °C erhitzten Diisocyanat; nach ca. 3 min steigt die Temperatur auf ca. 130 °C. Nach Erreichen des Temperaturmaximums ist die Reaktion beendet. Der Umsatz wird (bei konstanter Starttemperatur von 80 °C) durch die Konzentration des Katalysators geregelt. In der Regel wird die Katalysatorkonzentration (0,1 - 0,2 %) so gewählt, daß unter den genannten Reaktionsbedingungen ca. 40 % des eingesetzten Diisocyanats umgesetzt sind. Die Abtrennung des nicht umgesetzten Diisocyanats erfolgt durch Dünnschichtdestillation bei 120 - 180 °C/0,1 mbar. Die so hergestellten Isocyanurate enthalten einen NCO-Gehalt von 16 - 23 % und einen Monomergehalt von ≤ 0,5 %.

In der Regel werden die Biuret- bzw. Isocyanuratgruppen aufweisenden Polyisocyanate mit dem Polyamin B, das mindestens zwei sterisch gehinderte Aminogruppen enthält, ohne weitere Umsetzung zum erfindungsgemäßen feuchtigkeitsvernetzenden PUR-Schmelzklebstoff umgesetzt. In manchen Fällen hat es sich aber als zweckmäßig erwiesen, diese Polyisocyanate vor der Umsetzung mit dem Polyamin einer Molekülvergrößerung mit einem Polyesterdiol mit einem Molgewicht von 400 - 2 000, vorzugsweise 1 000, zu "unterwerfen", wobei das Molverhältnis von Polysocyanat zu Polyesterdiol 2 : 1 beträgt.

Als Reaktionskomponenten für das NCO-Präpolymer kommen im Prinzip alle Verbindungen in Frage, die mindestens zwei 2.2.6.6-Tetramethylpiperidin-Gruppen pro Mol enthalten. Solche Verbindungen werden durch Reaktion folgender, leicht zugänglicher Monomerbausteine: 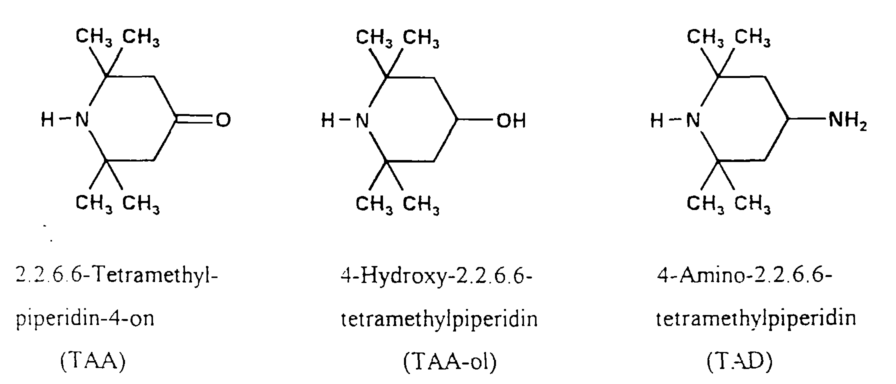 mit mindestens zwei gegenüber Carbonyl-, Hydroxyl- und Aminogruppen reaktiven Gruppen enthaltenden Verbindungen in bekannter Weise erhalten

Beispielhaft für solche Reaktionsprodukte des TAA, TAA-ol bzw. TAD seien folgende Verbindungen genannt:

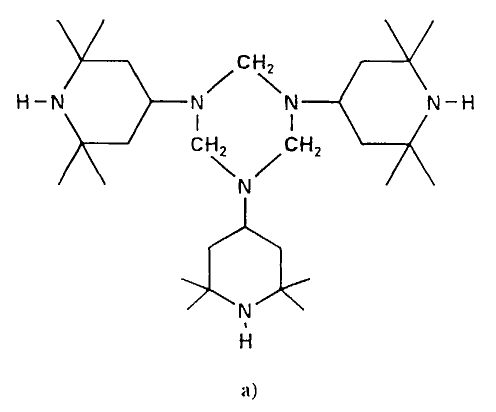

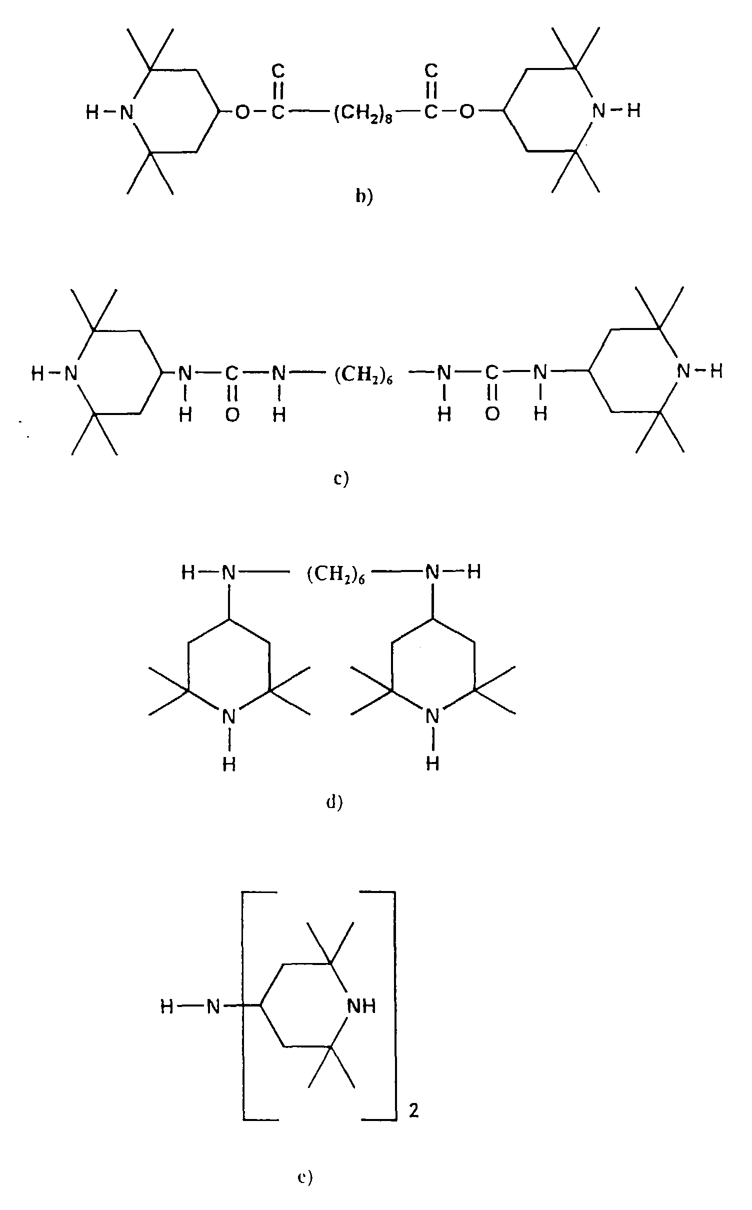

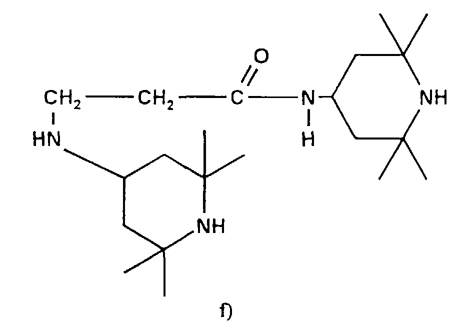

Ein weiteres für die Umsetzung mit den erfindungsgemäß einsetzbaren NCO-Präpolymeren geeignetes Polyamin ist das polymere 2.2.4-Trimethyldihydrochinolin (s. Formel B 2) mit einem Molgewicht von ca 600 - 1 200.

Die erfindungsgemäßen feuchtigkeitsvernetzenden PUR-Schmelzklebstoffe mit sehr hoher Anfangsfestigkeit zeichnen sich bei 100 - 150 °C durch eine Viskosität von 10⁵ -10³ mPa·s und einen Gehalt an sterisch gehinderten Harnstoffgruppen von 0,5 - 2,5 mmol/g aus.

Ein weiterer Gegenstand der vorliegenden Erfindung ist ein Verfahren zur Herstellung der erfindungsgemäßen feuchtigkeitsvernetzenden PUR-Schmelzklebstoffe Erfindungsgemäß wird zu dem auf 100 - 150 °C erhitzten NCO-Präpolymeren das Polyamin unter intensivem Rühren portionsweise zudosiert. Nach Beendigung der Polyaminzugabe ist die Herstellung des erfindungsgemäßen PUR-Schmelzklebstoffes praktisch beendet. Es hat sich als vorteilhaft erwiesen, dem Gemisch aus NCO-Präpolymer und Polyamin Stabilisatoren, die die physikalischen Eigenschaften, insbesondere die Schmelzviskosität und die Farbe, möglichst konstant halten sollen, zuzugeben. Dazu kann mindestens einer der folgenden beispielhaft genannten Stoffe verwendet werden Phosphorsäure, phosphorige Säure und Toluolsulfonylisocyanat Zweckmaßigerweise werden 0 - 0,5 %, insbesondere 0,01 - 0,1 %, des Stabilisators zugesetzt

Für die während des Abkühlens sehr schnell ablaufende Härtungsreaktion des Polyamins mit dem NCO-Präpolymeren sind keine Katalysatoren erforderlich Die sich anschließende Reaktion mit dem Wasser kann dagegen mit den bekannten PUR-Katalysatoren, wie z. B. Dibutylzinndilaurat (DBTL), beschleunigt werden. Ihre Menge reicht von 0 - 1,5 %, insbesondere von 0,5 - 1 %, bezogen auf das Gewicht des Präpolymers.

Enthält das im erfindungsgemäßen Verfahren eingesetzte Polyamin neben den sterisch gehinderten Aminogruppen noch zwei weitere funktionelle Gruppen (z. B. Verbindung d), die bei 100 - 150 °C mit den NCO-Gruppen des NCO-Präpolymeren im Gegensatz zu den sterisch gehinderten Aminogruppen nicht "labile", sondern stabile Bindungen eingehen, muß bei der Herstellung des erfindungsgemäßen feuchtigkeitsvernetzenden PUR-Schmelzklebstoffes wie folgt vorgegangen werden: Das Polyamin mit den zusätzlichen zwei funktionellen Gruppen wird bei 100 - 150 °C mit einem Diisocyanat, bevorzugt Isophorondiisocyanat, so umgesetzt, daß pro zusätzlicher funktioneller Gruppe 1 - 1,2 NCO-Gruppen zur Reaktion kommen. Bei dieser Umsetzung hat es sich als zweckmäßig erwiesen, 1 - 15 %, vorzugsweise 3 - 10 %, Kohlenwasserstoffharze zuzusetzen. Darunter werden Petroleum-, Kohlenteer- und Terpenharze verstanden. Sie haben im allgemeinen ein Molgewicht von weniger als 2 000; bevorzugte Kohlenwasserstoffharze sind modifizierte aromatische Kohlenwasserstoffharze, Terpenharze wie α-und β-Pinen-Polymere, niedermolekulare Polystyrole wie etwa Poly-α-methylstyrol, Kolophoniumester und Cumaron/Inden-Harze.

Nach beendeter Umsetzung der zusätzlichen funktionellen Gruppen des Polyamins mit den NCO-Gruppen des Diisocyanats erfolgt bei 100 - 150 °C die portionsweise Zugabe des NCO-Präpolymeren. Nach erfolgter Zugabe ist der erfindungsgemäße PUR-Schmelzklebstoff sofort einsetzbar. Der Klebstoff wird mit einer Auftragsmaschine, vorzugsweise Schmelzklebepistole, in einer Dicke von 0,05 - 0,7 mm auf das zu verklebende Substrat aufgetragen. Unmittelbar nach dem Auftrag des erfindungsgemäßen feuchtigkeitsvernetzenden PUR-Schmelzklebstoffs und dem Zusammendrücken der zu verklebenden Flächen - genauer gesagt, dann, wenn die Schmelzklebefuge Raumtemperatur erreicht hat - hat auch die Verklebung ihre Endfestigkeit bei Raumtemperatur erreicht, was bei der entsprechenden Verklebung mit einem herkömmlichen feuchtigkeitsvernetzenden PUR-Schmelzklebstoff 1 - 7 Tage dauern würde. Der Grund hierfür liegt darin, daß bei den erfindungsgemäßen feuchtigkeitsvernetzenden PUR-Schmelzklebstoffen sich bei Raumtemperatur praktisch spontan ein vernetztes Polymer mit sehr hohem Molgewicht (theor.: unendlich) und damit guter Kohäsion bildet, während dies - also die Bildung eines vernetzten Polymers - bei den herkömmlichen feuchtigkeitsvernetzenden PUR-Schmelzklebstoffen erst langsam durch Reaktion mit dem H₂O gebildet werden kann. Ein weiteres wichtiges Merkmal der erfindungsgemäßen feuchtigkeitsvernetzenden PUR-Schmelzklebstoffe ist, daß das sich bei Raumtemperatur gebildete sterisch gehinderte Harnstoffgruppen enthaltende thermolabile Polymer mit H₂O unter Freisetzung der sterisch gehinderten Aminogruppen zu einem stabile Harnstoffgruppen enthaltenden duroplastischen Polymer umwandelt.

Wäre dies nicht der Fall, hätte der erfindungsgemäße feuchtigkeitsvernetzende PUR-Schmelzklebstoff die wichtigste Eigenschaft der herkömmlichen feuchtigkeitsvernetzenden PUR-Schmelzklebstoffe, die gute Klebefestigkeit auch bei höheren Temperaturen, nicht, da ja die sterisch gehinderten Harnstoffgruppen thermolabil sind.

Zum besseren Verständnis der vorliegenden Erfindung soll noch einmal kurz auf die für das Zustandekommen des erfindungsgemäßen feuchtigkeitsvernetzenden PUR-Schmelzklebstoffs zwingend notwendigen Kriterien eingegangen werden

### Herstellung des erfindungsemäßen feuchtigkeitsvernetzenden PUR-Schmelzklebstoffs und dessen Applikation

Das NCO-Präpolymer ist mit dem sterisch gehinderten Polyamin gemäß dem erfindungsgemäßen Verfahren verarbeitbar, da bei 100 - 150 °C folgendes Gleichgewicht: 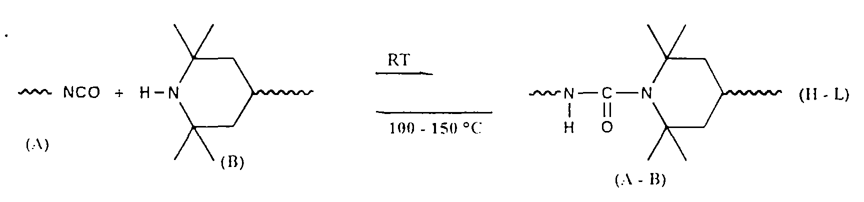 ganz auf der Seite der Ausgangskomponenten (A, B) liegt, d. h. also, daß zwischen dem NCO-Präpolymeren und dem sterisch gehinderten Aminogruppen enthaltenden Polyamin bei 100 - 150 °C keine Reaktion stattfindet. Mit fallender Temperatur verschiebt sich das Gleichgewicht immer mehr auf die Seite der Reaktionsprodukte (A - B); bei Raumtemperatur liegt ausschließlich das Reaktionsprodukt A - B) vor.

Es wird somit auch verständlich, daß die Schmelzklebefüge ihre Endfestigkeit (bei Raumtemperatur) dann erreicht hat, wenn die als Schmelze aufgetragenen Komponenten A und B Raumtemperatur erreicht haben. Bei höheren Temperaturen versagt natürlich diese Verklebung, da ja diese aus A und B gebildeten Harnstoffgruppen bei erhöhten Temperaturen in die Ausgangskomponenten dissoziieren.

### 2. Reaktion der sterisch gehinderten Harnstoffgruppe (H-L) mit H₂O

Da aber die sterisch gehinderte Harnstoffgruppe sehr hydrolyseempfindlich ist: 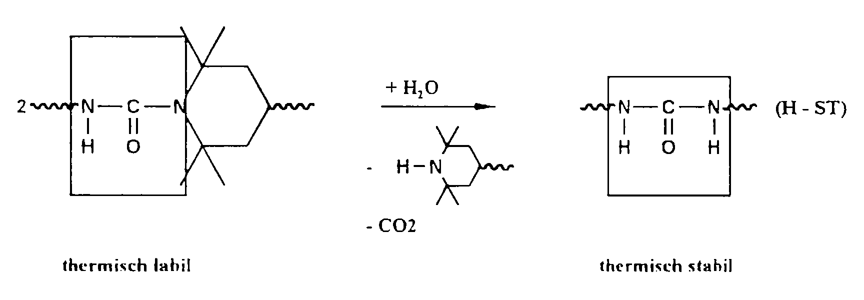 und durch Reaktion mit H₂O in eine thermisch stabile Harnstoffgruppe (H-ST) umgewandelt wird, erhält der erfindungsgemäße PUR-Schmelzklebstoff nach einiger Zeit (1 - 7 Tage) auch seine gute Klebefestigkeit bei höheren Temperaturen, ähnlich wie dies bei den herkömmlichen feuchtigkeitsvernetzenden PUR-Schmelzklebstoffen der Fall ist.

Zur Verklebung mit den erfindungsgemäßen feuchtigkeitsvernetzenden PUR-Schmelzklebstoffen kommen im Prinzip alle Materialien in Frage, bevorzugt werden jedoch saugfähige Substrate damit verklebt

Neben der hohen Anfangsfestigkeiten weisen die erfindungsgemäßen PUR-Schmelzklebstoffe auf Basis (cyclo)aliphatischer Diisocyanate gegenüber den herkömmlichen PUR-Schmelzklebstoffen, die ausnahmslos auf MDI basieren. noch eine Reihe weiterer Vorteile wie verbesserte Lagerbeständigkeit und kaum Allophanatbildung bei höheren Temperaturen auf.

### Experimenteller Teil

### A) Ausgangsverbindungen

1. NCO-Präpolymere (A)
   1.1 Trimeres Hexamethylendiisocyanat mit einem NCO-Gehalt von 22 %
   1.2 Trimeres Isophorondiisocyanat mit einem NCO-Gehalt von 17,3 %
   1.3 Reaktionsprodukt aus 7 NCO-Äquivalenten trimeres Isophorondiisocyanat (A) 1.2) und 1 mol eines Polyesterdiols aus Adipinsäure und Hexandiol mit Molgewicht 1000 mit einem NCO-Gehalt von 7,4 %
2. Sterisch gehinderte Aminogruppen aufweisende Polyamine (B)
   2.1 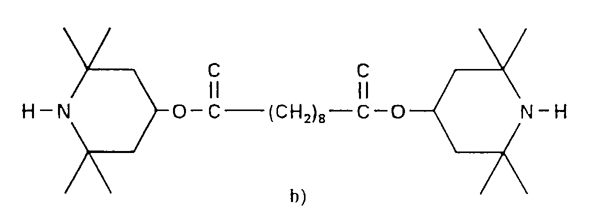
   2.2 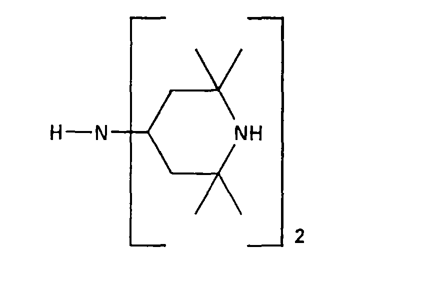
   2.3

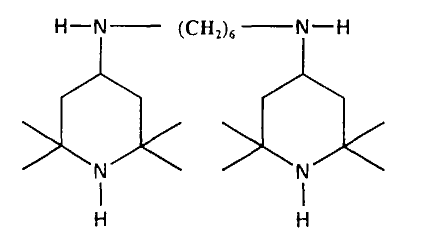

### B) Herstellung des erfindungsgemäßen feuchtigkeitsvernetzenden PUR-Schmelzklebstoffs und seine Anwendung zur Herstellung von Verklebungen

### 1. Allgemeine Herstellungsvorschrift

Zu dem auf 100 - 150 °C erhitzten NCO-Präpolymeren A wird unter intensivem Rühren das sterisch gehinderte Aminogruppen enthaltende Polyamin portionsweise so zugegeben, daß auf 1 NCO-Äquivalent 1 Äquivalent NH kommt. Nach erfolgter Polyaminzugabe ist die Herstellung des erfindungsgemäßen feuchtigkeitsvernetzenden PUR-Schmelzklebstoffs mit einer Viskosität bei 100 - 150 °C von - 10³ - 10⁵ mPa·s beendet; er kann sofort mit geeigneten Geräten appliziert werden.

Wenn zur Herstellung des feuchtigkeitsvernetzenden PUR-Schmelzklebstoffs das Polyamin A) 2.3 eingesetzt wird, wird es vor dem Mischen mit dem NCO-Präpolymeren zunachst mit Isophorondiisocyanat im Molverhaltnis 1 : 1,1 umgesetzt (bei 140 - 150 °C; es reagieren nur die beiden nicht sterisch gehinderten Aminogruppen). Danach erfolgt bei 150 °C das Mischen mit dem NCO-Präpolymeren.

Die in der nachfolgenden Tabelle aufgeführten erfindungsgemäßen feuchtigkeitsvernetzenden PUR-Schmelzklebstoffe wurden entsprechend dieser Vorschrift hergestellt.

### 2. Herstellung der Verklebungen

Die zu verklebenden Prufkörper aus Holz wurden gereinigt und bei ca. 60 °C mit dem erfindungsgemäßen feuchtigkeitsvernetzenden PUR-Schmelzklebstoff beschichtet. Es hat sich als vorteilhaft erwiesen, beide zu verklebenden Flächen zu beschichten. Nach dein Klebstoffauftrag wurden die zu verklebenden Flächen zusammengedruckt und mit einer Schraubzwinge fixiert. Nach 2 h, 7 d und 90 d wurde die Zugscherfestigkeit dieser Verklebungen bei Raumtemperatur sowie 80 °C (DIN 53 283) gemessen.

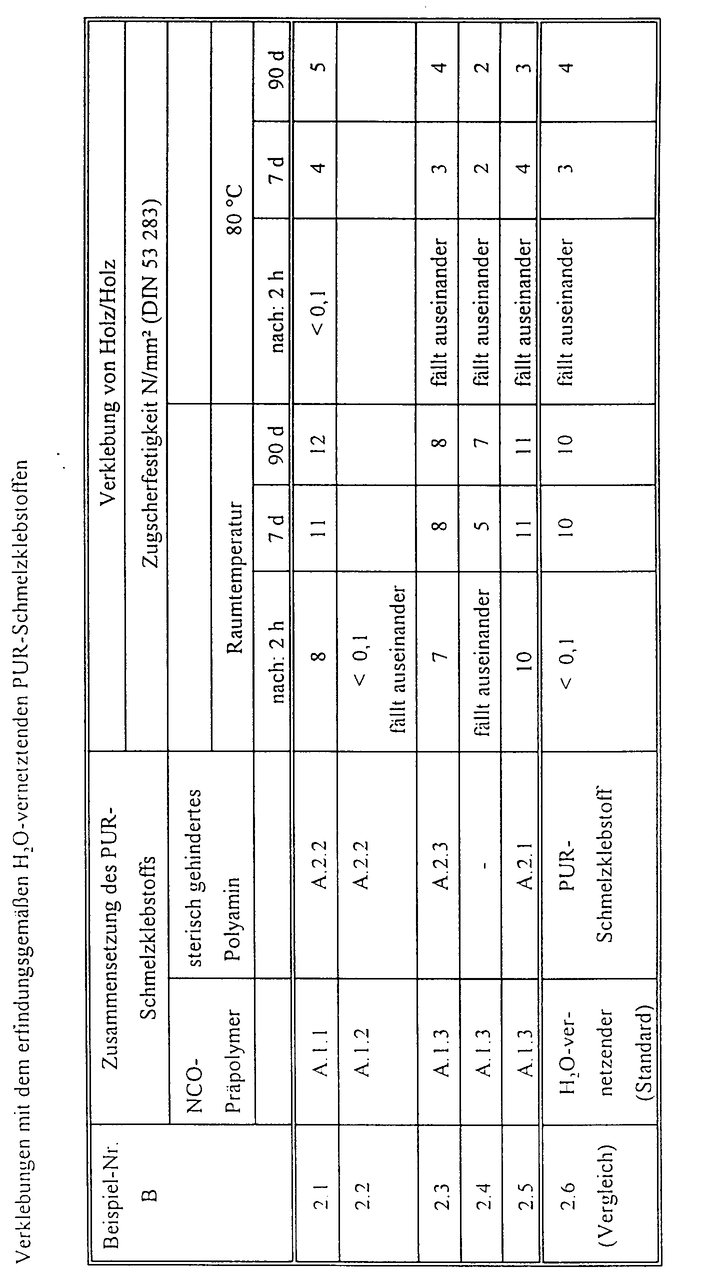

## Patentansprüche

1. Feuchtigkeitsvernetzender PUR-Schmelzklebstoff mit hoher Anfangsfestigkeit, dadurch gekennzeichnet,
daß er erhältlich ist durch Umsetzung
A) eines NCO-Präpolymeren mit aliphatischen, cycloaliphatischen, (cyclo)aliphatischen oder aromatischen NCO-Gruppen und einem NCO-Gehalt von 1 - 23 % mit
B) einem Polyamin, das
1. mindestens zwei sterisch gehinderte Aminogruppen folgender Zusammensetzung enthält: 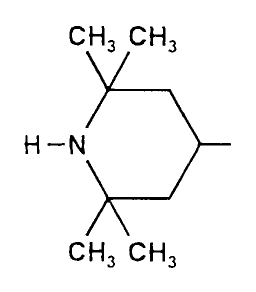 oder
2. folgende Zusammensetzung aufweist: 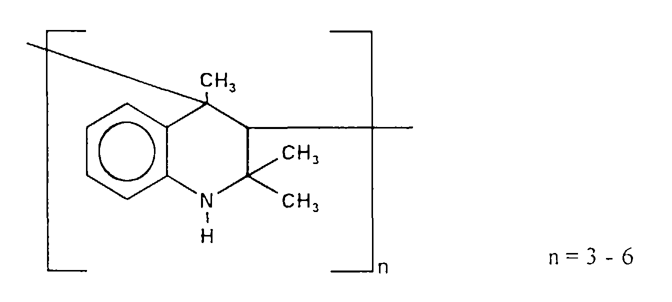 wobei pro NCO-Gruppe 1 - 0,6 sterisch gehinderte Aminogruppe zur Reaktion kommen.

2. Feuchtigkeitsvernetzender PUR-Schmelzklebstoff gemaß Anspruch 1.
dadurch gekennzeichnet,
daß das NCO-Präpolymer durch Umsetzung eines organischen Diisocyanats OCN-R-NCO, wobei R der Rest eines aliphatischen, cycloaliphatischen (cyclo)aliphatischen und/oder aromatischen Diisocyanats mit 6 - 14 C-Atomen mit einem gegebenenfalls Estergruppen enthaltenden Polyol mit einem Molgewicht von 62 - 4 000 im NCO : OH-Verhältnis von 2 : 1 erhalten wird

3. Feuchtigkeitsvernetzender PUR-Schmelzklebstoff nach einem der vorherigen Ansprüche,
dadurch gekennzeichnet,
daß das NCO-Präpolymer ein Isocyanuratgruppen enthaltendes Polyisocyanat folgender Zusammensetzung ist: 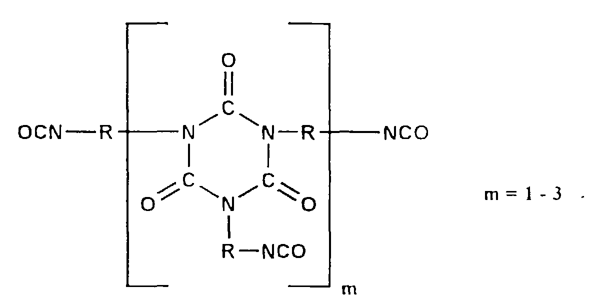 wobei R der Rest eines aliphatischen, cycloaliphatischen, (cyclo)aliphatischen oder aromatischen Diisocyanats mit 6 - 14 C-Atomen mit einen gegebenenfalls Estergruppen enthaltenden Polyol mit einen Molgewicht von 62 - 4 000 im NCO : OH-Verhältnis von 2 : 1 erhalten wird

4. Feuchtigkeitsvernetzender PUR-Schmelzklebstoff nach einem der vorherigen Ansprüche,
dadurch gekennzeichnet,
daß das NCO-Präpolymer ein Biuretgruppen enthaltendes Polyisocyanat folgender Zusammensetzung ist: 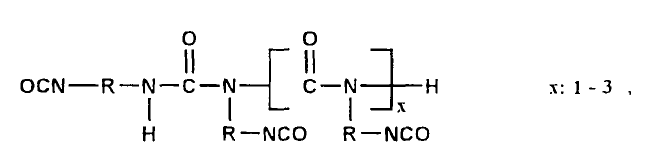 wobei R der Rest eines aliphatischen, cycloaliphatischen, (cyclo)aliphatischen oder aromatischen Diisocyanats mit 6 - 14 C-Atomen mit einem gegebenenfalls Estergruppen enthaltenden Polyol mit einem Molgewicht von 62 - 4 000 im NCO : OH-Verhältnis von 2 : 1 erhalten wird.

5. Feuchtigkeitsvernetzender PUR-Schmelzklebstoff nach einem der vorherigen Ansprüche,
dadurch gekennzeichnet,
daß das NCO-Präpolymer ein Reaktionsprodukt aus 2 Molen des Isocyanuratgruppen enthaltenden Polyisocyanat (aus Anspruch 3) und einem Mol eines Polyesterdiols mit einem Molgewicht von 400 - 2 000, vorzugsweise 1 000, ist.

6. Feuchtigkeitsvernetzender PUR-Schmelzklebstoff nach einem der vorherigen Ansprüche,
dadurch gekennzeichnet,
daß das sterisch gehinderte Aminogruppen enthaltende Polyamin folgende Zusammensetzung aufweist:

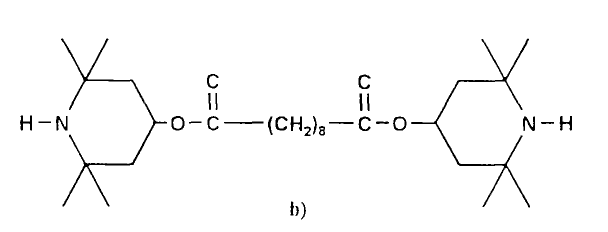

7. Feuchtigkeitsvernetzender PUR-Schmelzklebstoff nach einem der vorherigen Ansprüche,
dadurch gekennzeichnet
daß das sterisch gehinderte Aminogruppen enthaltende Polyamin folgende Zusammensetzung aufweist:

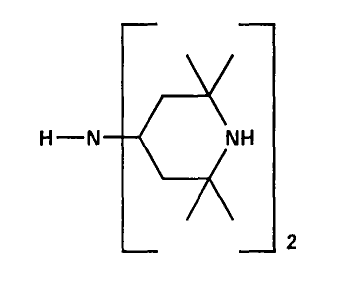

8. Feuchtigkeitsvernetzender PUR-Schmelzklebstoff nach einem der vorherigen Ansprüche,
dadurch gekennzeichnet,
daß das sterisch gehinderte Aminogruppen enthaltende Polyamin folgende Zusammensetzung aufweist:

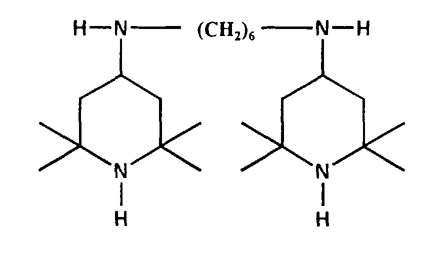

9. Verfahren zur Herstellung der feuchtigkeitsvernetzenden PUR-Schmelzklebstoffe nach einem der vorherigen Ansprüche,
dadurch gekennzeichnet,
daß das NCO-Präpolymer A und das sterisch gehinderte Aminogruppen enthaltende Polyamin B bei 100 - 150 °C miteinander gemischt werden.

10. Verfahren zur Herstellung der feuchtigkeitsvernetzenden PUR-Schmelzklebstoffe nach einem der vorherigen Ansprüche,
dadurch gekennzeichnet,
daß das sterisch gehinderte Amin aus Anspruch 8 Vor dem Mischen mit dem NCO-Präpolymeren mit einem Diisocyanat, vorzugsweise Isophorondiisocyanat, im Molverhältnis 1 : 1,2, vorzugsweise 1 : 1,12, gegebenenfalls in Gegenwart von 1 - 15, vorzugsweise 3 - 10 %, eines Kohlenwasserstoffharzes umgesetzt wird.

11. Verwendung des PUR-Schmelzklebstoffs nach einem der vorherigen Ansprüche zum Verkleben hitzeresistenter Substrate.
